# EUROPEAN PATENT APPLICATION

(11) **EP 4 663 285 A1**
(43) Date of publication of application: **17.12.2025**
(21) Application number: 23935114.1
(22) Date of filing: 07.12.2023
(51) Int. Cl.: B01F 33/82, H01M 10/0525, B01D 19/00

(54) **HOMOGENIZATION PROCESS AND USE THEREOF**

(30) Priority: 27.04.2023 CN 202310470925
(71) Applicant: Eve Power Co., Ltd., Jingmen, Hubei 448000 (CN)
(72) Inventor: WANG, Wenjun, Jingmen, Hubei 448000 (CN); LIU, Yongmao, Jingmen, Hubei 448000 (CN); ZHANG, Fei, Jingmen, Hubei 448000 (CN)
(74) Representative: Studio Torta S.p.A.
(86) International application number: PCT/CN2023/137250
(87) International publication number: WO 2024/221948

(57) **Abstract**

A slurry homogenization process and a use thereof, including the following steps: performing a first pre-mixing on a main material, a first conductive agent, and a binder to obtain a first mixture, while performing a second mixing on a first solvent independently; adding the first mixture into the first solvent, and sequentially performing a second pre-mixing and a first dispersing to obtain a third mixture; and adding a conductive slurry into the third mixture, sequentially performing a third pre-mixing and a second dispersing, and defoaming and cooling to obtain a homogenized slurry.

## Description

This application claims priority to and the benefit of Chinese Patent Application No. 202310470925.1, filed on April 27, 2023, the disclosure of which is incorporated herein by reference in its entirety.

### TECHNICAL FIELD

The present application relates to the field of lithium-ion batteries, for example, to a slurry homogenization process and a use thereof.

### BACKGROUND

In the related art, a double-planetary stirring process is commonly used for the homogenization of materials of the positive electrode in the lithium-ion battery. The double-planetary stirring process can be further classified into a dry slurry homogenization process or a pre-gel wet process. However, the above methods mainly have the following disadvantages. (1) A double planetary device has a large footprint and require three or more sets of equipment to meet the production capacity requirements under the same output. (2) The equipment has high energy consumption, and relies on high-power explosion-proof motors to drive the mixing blades and dispersion wheels, generating considerable noise during operation. (3) Both the initial equipment investment and subsequent maintenance expenses are high. (4) Using the double-planetary device in either the dry process or the pre-gel wet process typically takes 4 hours to 7 hours to complete a single batch of slurry, with cumbersome process steps and low productivity. (5) The slurry produced by traditional processes often exhibits inadequate uniformity, containing micro-particles that adversely affect the quality and resistance of coated films. (6) Conventional slurry preparation processes generally reach a solid content of only around 55%, which can be improved through the development of novel slurry homogenization processes.

In response to the deficiencies of traditional slurry homogenization processes, those skilled in the art have conducted extensive research to develop novel slurry homogenization processes.

For example, one method involves adding a binder, a conductive agent, and a main material into a mixer simultaneously for initial blending, followed by two separate solvent additions during agitation. However, this two-step solvent addition fails to effectively enhance the fineness and the solid content of the slurry, necessitating further optimization of the feeding protocol to improve the fineness and the solid content of the slurry.

For another example, a slurry homogenization process for materials of the positive electrode in the lithium-ion battery includes steps such as solution preparation, stirring by using a V-type mixer, premixed stirring, high-speed stirring, viscosity adjustment, and defoaming under vacuum. However, the use of the V-type mixer fails to ensure the fineness and the fluidity of the slurry while incurring excessively high production costs.

Therefore, developing an innovative slurry homogenization process that reduces operation cost of the enterprise while improving quality of the slurry remains a crucial research direction in this field.

### SUMMARY

### TECHNICAL PROBLEM

The present application provides a slurry homogenization process and a use thereof, which can not only reduce the operation cost of the enterprise, but also improve the quality of the slurry.

### TECHNICAL SOLUTIONS

In a first aspect, some embodiments of the present application provide a slurry homogenization process, which includes the following steps:
performing a first pre-mixing on a main material, a first conductive agent, and a binder to obtain a first mixture, while performing a second mixing on a first solvent independently;
adding the first mixture into the first solvent, and sequentially performing a second pre-mixing and a first dispersing to obtain a third mixture; and
adding a conductive slurry into the third mixture, sequentially performing a third pre-mixing and a second dispersing, and defoaming and cooling to obtain a homogenized slurry.

In a second aspect, some embodiments of the present application provide a use of the slurry homogenization process as described in one of the objects, and the slurry homogenization process is applied in the field of lithium-ion batteries.

### BENEFICIAL EFFECTS

Beneficial effects of the present application: the slurry homogenization process of the present application simplifies the slurry preparation process, reducing the period of time for a single batch of slurry to less than 1.3 hours. By using the homogenization process of the present application, the quality of the slurry can be improved, ensuring that the fineness of the slurry, sieving performance, and the fluidity of the slurry all meet the requirements of the process specification. Additionally, this process effectively increases the solid content of the slurry, which is raised from 55% to 60%, thereby saving solvents and reducing manufacturing costs.

### BRIEF DESCRIPTION OF THE DRAWINGS

FIG. 1 is a flowchart of a slurry homogenization process provided in Examples 1 to 7 of the present application.
FIG. 2 is a flowchart of a slurry homogenization process provided in Comparative Example 1 of the present application.

### DETAILED DESCRIPTION

### Example 1

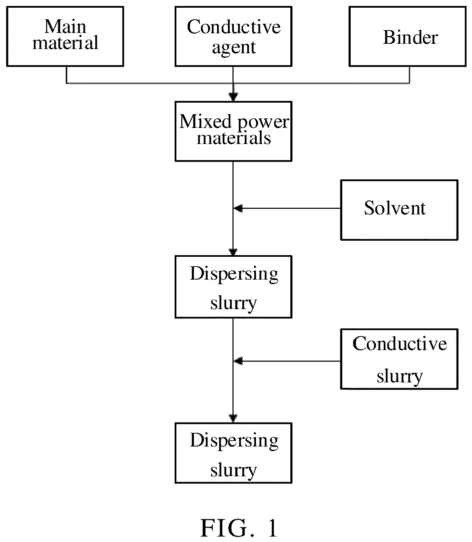

This example provides a slurry homogenization process, and a flowchart of this process is shown in FIG. 1.
(1) Weigh specified quantities of a main material (lithium iron phosphate), a conductive agent (SP), conductive slurry (multi-walled carbon nanotubes), a binder (PVDF), and a solvent (NMP) according to a ratio of these compositions. Sequentially pour the weighed main material, the conductive agent, and the binder into a pre-mixing chamber according to an order of the main material (48%), the conductive agent (2%), the binder (2%), and the main material (48%), followed by 18 minutes of pre-mixing. Add a measured amount of solvent to a circulating tank. The circulation flow rate of the solvent was maintained constant by a rotor pump or a screw pump during circulation between a pulping machine and the circulating tank.
(2) When the circulation flow rate of the solvent was stable and the pre-mixing of the powder materials was completed, set the linear velocity of the pulping machine to 24 m/s and the linear velocity of the circulating tank to 24 m/s. Initiate feeding of the powder materials, where the powder materials were fed into the pulping machine through a feeding screw to undergo initial pre-mixing with the solvent for 27 minutes. After the initial pre-mixing was completed, maintain the linear velocity of the pulping machine at 24 m/s for 22 minutes of dispersion.
(3) After the dispersion of the above slurry was completed, the slurry was temporarily stored in the circulating tank. Subsequently, the final material, conductive slurries (including 5% of multi-walled carbon nanotubes, 1.5% of a dispersant, and 93.5% of NMP), was added. The conductive slurries accounted for 10% by mass of the slurry in the circulating tank. Premix the slurries in the circulating tank for 10 minutes at a linear velocity of 24 m/s. The slurries were dispersed, and the circulation flow rate of the slurries was maintained constant by a rotor pump or a screw pump during circulation between the pulping machine and the circulating tank, with the pulping machine and the circulating tank both operating at a linear velocity of 24 m/s for 22 minutes. After the dispersion of the slurries was completed, slowly agitate the slurries in the circulating tank to allow them to undergo defoaming under vacuum, and then cool the slurries for 22 minutes to obtain a homogenized slurry.

### Example 2

This example provides a slurry homogenization process, and a flowchart of this process is shown in FIG. 1.
(1) Weigh specified quantities of a main material (lithium iron phosphate), a conductive agent (SP), conductive slurries (including 4% of multi-walled carbon nanotubes, 1% of a dispersant, and 95% of NMP), a binder (PVDF), and a solvent (NMP) according to a ratio of these compositions. Sequentially pour the weighed main material, the conductive agent, and the binder into a pre-mixing chamber according to an order of the main material (40%), the conductive agent (4%), the binder (6%), and the main material (50%), followed by 5 minutes of pre-mixing. Add a measured amount of solvent to a circulating tank. The circulation flow rate of the solvent was maintained constant by a rotor pump or a screw pump during circulation between a pulping machine and the circulating tank.
(2) When the circulation flow rate of the solvent was stable and the pre-mixing of the powder materials was completed, set the linear velocity of the pulping machine to 30 m/s and the linear velocity of the circulating tank to 30 m/s. Initiate feeding of the powder materials, where the powder materials were fed into the pulping machine through a feeding screw to undergo initial pre-mixing with the solvent for 15 minutes. After the initial pre-mixing was completed, maintain the linear velocity of the pulping machine at 30 m/s for 15 minutes of dispersion.
(3) After the dispersion of the above slurries was completed, the slurries were temporarily stored in the circulating tank. Subsequently, the final material, conductive slurries (including 4% of multi-walled carbon nanotubes, 2% of a dispersant, and 94% of NMP), was added. The conductive slurries accounted for 5% by mass of the slurries in the circulating tank. Premix the slurries in the circulating tank for 5 minutes at a linear velocity of 30 m/s. The slurries were dispersed, and the circulation flow rate of the slurries was maintained constant by a rotor pump or a screw pump during circulation between the pulping machine and the circulating tank, with the pulping machine and the circulating tank both operating at a linear velocity of 30 m/s for 15 minutes. After the dispersion of the slurries was completed, slowly agitate the slurries in the circulating tank to allow them to undergo defoaming under vacuum, and then cool the slurries for 15 minutes to obtain a homogenized slurry.

### Example 3

This example provides a slurry homogenization process, and a flowchart of this process is shown in FIG. 1.
(1) Weigh specified quantities of a main material (lithium iron phosphate), a conductive agent (SP), conductive slurries (including 6% of multi-walled carbon nanotubes, 2% of a dispersant, and 92% of NMP), a binder (PVDF), and a solvent (NMP) according to a ratio of these compositions. Sequentially pour the weighed main material, the conductive agent, and the binder into a pre-mixing chamber according to an order of the main material (50%), the conductive agent (5%), the binder (5%), and the main material (40%), followed by 30 minutes of pre-mixing. Add a measured amount of solvent to a circulating tank. The circulation flow rate of the solvent was maintained constant by a rotor pump or a screw pump during circulation between a pulping machine and the circulating tank.
(2) When the circulation flow rate of the solvent was stable and the pre-mixing of the powder materials was completed, set the linear velocity of the pulping machine to 18 m/s and the linear velocity of the circulating tank to 18 m/s. Initiate feeding of the powder materials, where the powder materials were fed into the pulping machine through a feeding screw to undergo initial pre-mixing with the solvent for 40 minutes. After the initial pre-mixing was completed, maintain the linear velocity of the pulping machine at 18 m/s for 30 minutes of dispersion.
(3) After the dispersion of the above slurries was completed, the slurries were temporarily stored in the circulating tank. Subsequently, the final material, conductive slurries (including 6% of multi-walled carbon nanotubes, 1% of a dispersant, and 93% of NMP), was added. The conductive slurries accounted for 60% by mass of the slurries in the circulating tank. Premix the slurries in the circulating tank for 15 minutes at a linear velocity of 18 m/s. The slurries were dispersed, and the circulation flow rate of the slurries was maintained constant by a rotor pump or a screw pump during circulation between the pulping machine and the circulating tank, with the pulping machine and the circulating tank both operating at a linear velocity of 18 m/s for 15 minutes. After the dispersion of the slurries was completed, slowly agitate the slurries in the circulating tank to allow them to undergo defoaming under vacuum, and then cool the slurries for 15 minutes to obtain a homogenized slurry.

### Comparative Example 1

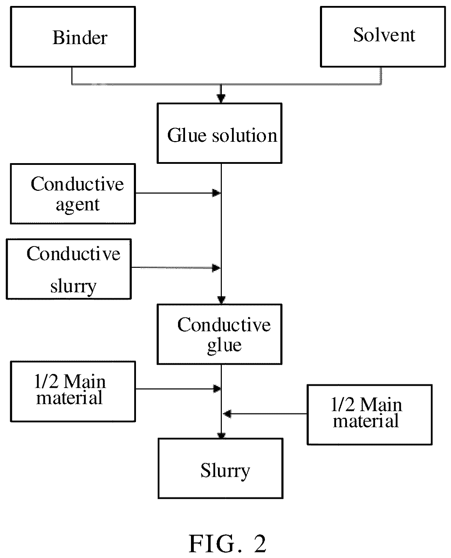

In this comparative example, all conditions were the same as in Example 1, except that the addition order of the main material, the binder, the solvent, the conductive agent, and the conductive slurry was replaced with the order shown in FIG. 2.

The homogenized slurries prepared in Examples 1 to 3 and Comparative Example 1 above were tested for solid content, slurry fineness, sieving performance, and fluidity, with the test results shown in Table 1.

The method for testing the solid content of the homogenized slurry was as follows: Weigh 1 g to 2 g of the homogenized slurry, dry it in an oven at 103°C for 4 hours, and use an analytical balance for precise measurement. Record the weight of a weighing bottle before weighing as A g, the weight of the homogenized slurry as B g, and the weight after drying (including the sample and the weighing bottle) as C g. Calculate the solid content of the homogenized slurry using the formula: (C- A)/B × 100%.

**Table 1**

| | Solid content |
|---|---|
| Example 1 | 60.1% |
| Example 2 | 58.9% |
| Example 3 | 59.6% |
| Comparative Example 1 | 55.0% |

From the above results, it can be concluded that the slurry homogenization process of the present application effectively increases the solid content of the slurry, which is raised from approximately 55% to around 60%, thereby saving solvents and reducing the manufacturing cost.

## Claims

1. A slurry homogenization process, comprising the following steps:
performing a first pre-mixing on a main material, a first conductive agent, and a binder to obtain a first mixture, while performing a second mixing on a first solvent independently;
adding the first mixture into the first solvent, and sequentially performing a second pre-mixing and a first dispersing to obtain a third mixture; and
adding a conductive slurry into the third mixture, sequentially performing a third pre-mixing and a second dispersing, and defoaming and cooling to obtain a homogenized slurry.

2. The slurry homogenization process according to claim 1, wherein based on a mass percent of the first mixture being 100%, a feeding sequence of the main material, the first conductive agent, and the binder is as follows: sequentially adding 40% to 60% of the main material, the first conductive agent, the binder, and 60% to 40% of the main material;
preferably, the main material comprises lithium iron phosphate;
preferably, the first conductive agent comprises SP;
preferably, the first conductive agent accounts for 0.2% to 5% by mass of the first mixture;
preferably, the binder comprises PVDF;
preferably, the binder accounts for 1.3% to 6% by mass of the first mixture;
preferably, the first pre-mixing is performed for a period of time ranging from 5 minutes to 30 minutes; and
preferably, the first pre-mixing is performed in a pre-mixing chamber.

3. The slurry homogenization process according to claim 1 or claim 2, wherein the first solvent comprises NMP;
preferably, a mass ratio of the first solvent to the first mixture is 1: (1.2 to 5);
preferably, the second mixing is performed in a circulating tank and a pulping machine;
preferably, a termination condition for the second mixing is as follows: a flow rate of the first solvent achieves stable during circulation between the pulping machine and the circulating tank; and
preferably, in the second mixing, a flow rate for circulating and dispersing between the pulping machine and the circulating tank is set between 50% and 65% of a pulping productivity.

4. The slurry homogenization process according to any one of claims 1 to 3, wherein the second pre-mixing is performed in a circulating tank and a pulping machine;
preferably, a linear velocity of the circulating tank in the second pre-mixing ranges from 18 m/s to 30 m/s;
preferably, a linear velocity of the pulping machine in the second pre-mixing ranges from 18 m/s to 30 m/s;
preferably, the second pre-mixing is performed for a period of time ranging from 15 minutes to 40 minutes; and
preferably, in the second pre-mixing, a flow rate for circulating and dispersing between the pulping machine and the circulating tank is set between 50% and 65% of a pulping productivity.

5. The slurry homogenization process according to any one of claims 1 to 4, wherein the first dispersing is performed in a circulating tank and a pulping machine;
preferably, a linear velocity of the circulating tank in the first dispersing ranges from 18 m/s to 30 m/s;
preferably, a linear velocity of the pulping machine in the first dispersing ranges from 18 m/s to 30 m/s;
preferably, the first dispersing is performed for a period of time ranging from 15 minutes to 30 minutes; and
preferably, in the first dispersing, a flow rate for circulating and dispersing between the pulping machine and the circulating tank is set between 50% and 65% of a pulping productivity.

6. The slurry homogenization process according to any one of claims 1 to 5, wherein the conductive slurry accounts for 5% to 20% by mass of the homogenized slurry;
preferably, based on a mass percent of the conductive slurry being 100%, the conductive slurry comprises 4% to 6% of a second conductive agent, 1% to 2% of a dispersant, and a second solvent;
preferably, the second conductive agent comprises carbon nanotubes;
preferably, the second solvent comprises NMP;
preferably, the third pre-mixing is performed in a circulating tank;
preferably, a linear velocity of the circulating tank in the third pre-mixing ranges from 18 m/s to 30 m/s; and
preferably, the third pre-mixing is performed for a period of time ranging from 5 minutes to 15 minutes.

7. The slurry homogenization process according to any one of claims 1 to 6, wherein the second dispersing is performed in a pulping machine and a circulating tank;
preferably, a condition for starting the second dispersing is as follows: a flow rate of the slurry achieves stable during circulation between the pulping machine and the circulating tank; and
preferably, in the second dispersing, a flow rate for circulating and dispersing between the pulping machine and the circulating tank is set between 50% and 65% of a pulping productivity.

8. The slurry homogenization process according to claim 7, wherein a linear velocity of the pulping machine in the second dispersing ranges from 18 m/s to 30 m/s;
preferably, a linear velocity of the circulating tank in the second dispersing ranges from 18 m/s to 30 m/s; and
preferably, the second dispersing is performed for a period time ranging from 15 minutes to 30 minutes.

9. The slurry homogenization process according to any one of claims 1 to 8, wherein the step of defoaming and cooling is performed for a period time ranging from 15 minutes to 30 minutes.

10. A use of the slurry homogenization process as claimed in any one of claims 1 to 9, wherein the slurry homogenization process is applied in the field of lithium-ion batteries.
